# EUROPÄISCHE PATENTSCHRIFT

(11) **EP 3 416 517 B1**
(45) Veröffentlichungstag und Bekanntmachung des Hinweises auf die Patenterteilung: **23.06.2021**
(21) Anmeldenummer: 16705431.1
(22) Anmeldetag: 19.02.2016
(51) Int. Cl.: A43D 1/02, A43B 13/18, B29D 35/12

(54) **VERFAHREN ZUM HERSTELLEN EINES SCHUHS, INSBESONDERE EINES SPORTSCHUHS**
METHOD FOR PRODUCING A SHOE, IN PARTICULAR A SPORTS SHOE
PROCÉDÉ DE FABRICATION D'UNE CHAUSSURE, EN PARTICULIER D'UNE CHAUSSURE DE SPORT

(43) Veröffentlichungstag der Anmeldung: 26.12.2018
(73) Patentinhaber: PUMA SE, 91074 Herzogenaurach (DE)
(72) Erfinder: HARTMANN, Matthias, 91301 Forchheim (DE); SUSSMANN, Reinhold, 91443 Scheinfeld (DE)
(74) Vertreter: Gosdin, Michael
(86) Internationale Anmeldenummer: PCT/EP2016/000297
(87) Internationale Veröffentlichungsnummer: WO 2017/140328

(56) Entgegenhaltungen:
- WO-A1-2009/126111
- WO-A1-2010/037028
- DE-A1-102012 017 882
- US-A1- 2011 283 560
- US-A1- 2014 182 170
- US-A1- 2015 237 967

## Beschreibung

Die Erfindung betrifft ein Verfahren zum Herstellen eines Schuhs, insbesondere eines Sportschuhs, umfassend die Schritte:
a) Messen mindestens einer individuellen Eigenschaft des Fußes einer Person und/oder einer Laufeigenschaft der Person mittels eines Messgeräts;
b) Bestimmen des Verlaufs einer Material- und/oder mechanischen Eigenschaft mindestens einer Sohle oder eines Sohlenteils des Schuhs entlang mindestens einer Erstreckungsrichtung der Sohle oder des Sohlenteils in Abhängigkeit der gemäß Schritt a) gemessenen Werte anhand eines vorgegebenen Algorithmus oder einer vorgegebenen Regel;
c) Herstellen der Sohle oder eines Sohlenteils des Schuhs, wobei die Materialeigenschaften und/oder mechanischen Eigenschaften entlang der mindestens einer Erstreckungsrichtung der Sohle oder des Sohlenteils verändert werden, so dass die Materialeigenschaften und/oder mechanischen Eigenschaften zumindest annähernd dem gemäß Schritt b) bestimmten Verlauf entsprechen;
d) Verbinden der gemäß Schritt c) hergestellten Sohle oder des Sohlenteils mit einem Schuhoberteil, um den Schuh fertigzustellen.

Klassische Herstellungsverfahren für Schuhe, insbesondere für Sportschuhe, sind bekannt. Zumeist wird eine Schuhsohle - gegebenenfalls bestehend aus mehreren Teilen (Außensohle, Zwischensohle, Innensohle) - hergestellt, was oft durch Spritzgießen eines geeigneten Kunststoffmaterials erfolgt. Dann wird das Schuhoberteil gefertigt, wobei Leder oder Textilmaterialien zum Einsatz kommen können. Zur Fertigstellung des Schuhs werden die Sohle und das Schuhoberteil miteinander verbunden, beispielsweise durch Vernähen oder Verkleben.

Dabei können im gegebenen Falle auch individuelle Wünsche des Benutzers eines Schuhs berücksichtigt werden, wobei Maßanfertigungen erfolgen können. Allerdings erfordert dies in der Regel einen hohen Kostenaufwand, da in erheblichem Umfang Arbeit entsprechender Schuh-Spezialisten benötigt wird.

Ein gattungsgemäßes Verfahren ist aus der WO 2009/126111 A1 bekannt. Ähnliche Verfahren offenbaren die DE 10 2012 017 882 A1**,** die US 2014/0182170 A1**,** die WO 2010/037028 A1 und die US 2011/283560 A1**.**

Der Erfindung liegt die **Aufgabe** zugrunde, ein Verfahren der eingangs genannten Art so weiterzubilden, dass es möglich ist, in einfacher und damit kostengünstiger Weise einen optimal passenden Schuh bereitzustellen. Der Schuh soll dabei schnell und somit kostengünstig fertigbar sein, allerdings individuelle Bedürfnisse eines Benutzers befriedigen können. Der Einsatz von Spezialisten bei der Schuhherstellung soll vermindert oder ganz vermieden werden können.

Die **Lösung** dieser Aufgabe durch die Erfindung ist dadurch gekennzeichnet, dass die Herstellung gemäß obigem Schritt c) erfolgt, indem Kunststoffmaterial in die Kavität eines Spritzgießwerkzeugs eingespritzt wird, wobei einem Grundmaterial der Sohle oder des Sohlenteils bei der Fertigung der Sohle oder des Sohlenteils mindestens ein Additiv abschnittsweise in unterschiedlichem Maße zugegeben wird.

Das Messen gemäß obigem Schritt a) erfolgt bevorzugt, indem die Druckverteilung des Fußes der Person über der Auftrittsfläche des Fußes am Boden bestimmt wird; das Messen erfolgt in diesem Falle bevorzugt mittels einer Druckaufnahmeplatte.

Das Messen gemäß obigem Schritt a) erfolgt nach einer anderen bevorzugten Lösung, indem das Laufverhalten der Person ermittelt wird, insbesondere die Tendenz des Fußes zur Pronation oder Supination. Das Messen erfolgt in diesem Falle bevorzugt mittels einer Kamera und einem Laufband.

Die Bestimmung gemäß obigem Schritt b) erfolgt bevorzugt, indem der Verlauf einer Material- und/oder mechanischen Eigenschaft entlang der Längsachse der Sohle festgelegt wird. Allerdings kann genauso vorteilhaft auch vorgesehen werden, dass der Verlauf einer Material- und/oder mechanischen Eigenschaft entlang der zur Längsachse quer verlaufenden Richtung der Sohle festgelegt wird. Besonders bevorzugt erfolgt eine Kombination beider angesprochener Vorgehensweisen, wonach besagter Verlauf einer Material- und/oder mechanischen Eigenschaft über den Verlauf der Ebene erfolgt, mit der der Fuß des Trägers auf dem Boden aufliegt. Dabei sieht eine besondere Ausgestaltung vor, dass das Grundmaterial der Sohle oder des Sohlenteils Polyurethan ist. Durch Zugabe eines Additivs kann dann die Materialeigenschaft bzw. mechanische Eigenschaft des Polyurethans verändert und somit gezielt gesteuert werden. Im Stand der Technik ist es dabei hinlänglich bekannt, welche Additive geeignet sind, um insbesondere beispielsweise die Härte des Polyurethans zu beeinflussen.

Die Materialeigenschaft, die entlang der mindestens einen Erstreckungsrichtung der Sohle oder des Sohlenteils verändert wird, ist bevorzugt die Härte, insbesondere die Shore-Härte, des Materials.

Das gefertigte Sohlenteil ist bevorzugt eine Zwischensohle des Schuhs und/oder eine Außensohle desselben.

Die Sohle kann beim Verbinden gemäß obigem Schritt d) mit dem Schuhoberteil vernäht oder verklebt werden.

Das vorgeschlagene Verfahren ist besonders vorteilhaft, wenn es auf einer integrierten Anlage durchgeführt wird, die sowohl zeitlich als auch räumlich eine konzentrierte Herstellung des Schuhs erlaubt. Demgemäß können die obigen Schritte a) bis d) in räumlicher Nähe, insbesondere in einem Schuhgeschäft, erfolgen. Die Schritte a) bis d) können auch in zeitlicher Nähe erfolgen, insbesondere binnen eines Zeitraums von maximal 3 Stunden. Damit ist es möglich, sehr schnell einem Kunden einen individuell auf ihn zugeschnittenen Schuh anzubieten, der an seine Gegebenheiten optimal angepasst ist.

Das vorgeschlagene Konzept stellt also darauf ab, eine Sohle bzw. einen Teil einer solchen (Zwischen- und/oder Außensohle) bedarfsgerecht vorteilhaft direkt in einem Schuhgeschäft zu fertigen, wobei die Sohle bzw. das Sohlenteil abschnittsweise bzw. in vorgegebenen definierten Zonen unterschiedliche Eigenschaften aufweist.

Generell gilt, dass Sohlenfertigungsmaschinen, die eine solche Produktion erlauben, im Stand der Technik bekannt sind. Es wird exemplarisch auf Sohlenmaschinen der Klöckner Desma Schuhmaschinen GmbH hingewiesen, die es erlauben, eine Sohle bzw. ein Sohlenteil nicht nur homogen aus einem einzigen Material zu fertigen, sondern den Spritzgießprozess der Sohle bzw. des Sohlenteils so zu steuern, dass sich eine inhomogene Struktur ergibt.

Bevorzugt wird bei der vorgeschlagenen Idee - wie erwähnt - ein Polyurethan-Gemisch durch die Zugabe mindestens eines geeigneten Additivs in seiner Eigenschaft variiert, was vorliegend im Rahmen der Erfindung genutzt wird, um eine Schuhsohle abschnittsweise mit unterschiedlichen Eigenschaften zu versehen.

Am Ort der Anlage, insbesondere also in einem Schuhgeschäft, wird dann zunächst beispielsweise ein Scan des Fußes des Kunden angefertigt und festgestellt, welche Laufcharakteristik der Kunde aufweist. Abhängig davon wird dann die Ausgestaltung der Sohle hinsichtlich verschiedener Zonen festgelegt und diese dann vor Ort hergestellt und mit einem Schuhoberteil verbunden.

In vorteilhafter Weise kann so ein individuell passgenauer Schuh, der einem Kunden also individuell angepasst ist, schnell und somit kostengünstig hergestellt werden.

In der Zeichnung ist ein Ausführungsbeispiel der Erfindung dargestellt. Es zeigen:
- Fig. 1: schematisch die Draufsicht auf eine Druckaufnahmeplatte, mit der die Druckverteilung eines Fußes einer Person über der Aufstands-fläche auf dem Boden aufgenommen wurde,
- Fig. 2: schematisch in der geschnittenen Seitenansicht ein Spritzgieß-werkzeug, mit der die Sohle eines Schuhs gefertigt wird, und
- Fig. 3: die fertige Sohle und ein Schuhoberteil vor dem Verbinden der beiden Teile.

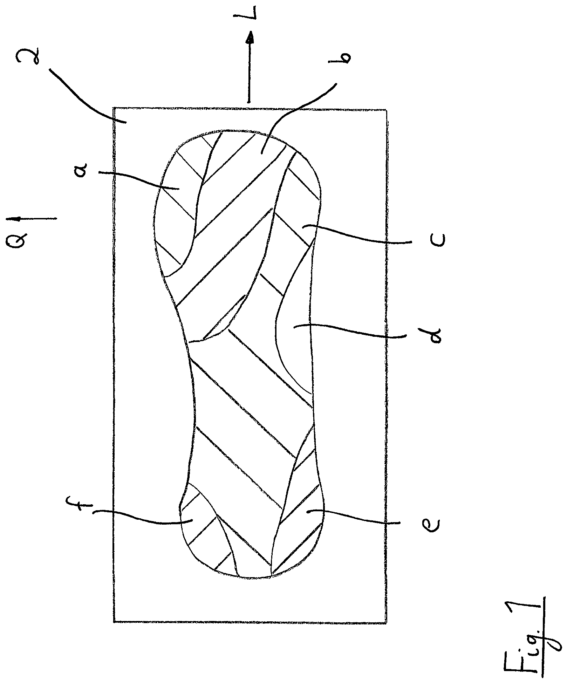

In Figur 1 ist schematisch eine ebene Druckaufnahmeplatte 2 dargestellt, die als Messgerät fungiert, mit dem die Druckverteilung gemessen wird, die sich ergibt, wenn eine Person auf die Druckaufnahmeplatte 2 auftritt. Schematisch und nur zum Zwecke der Illustration sind sechs Bereiche a, b, c, d, e und f skizziert, in denen unterschiedlicher Druck herrscht, wenn die Person auf dem Boden steht.

Insoweit kann mittels der Druckaufnahmeplatte 2 bestimmt werden, wie sich für eine individuelle Person die Druckverteilung infolge der persönlichen Ergonomie des Fußes ergibt. Anhand der Druckaufnahmeplatte 2 ist es daher möglich, die genannten Bereiche a, b, c, d, e und f zu identifizieren, in denen verschiedene Drücke herrschen (wobei für die verschiedenen genannten Bereiche jeweils Druckintervalle definiert sein können). Aufgrund der Längsachse L des Fußes und korrespondierend hierzu der Sohle des zu fertigenden Schuhs sowie der hierzu quer liegenden Richtung Q kann daher für eine individuelle Person anhand der Druckaufnahmeplatte die Druckverteilung über der Auftrittsfläche des Fußes auf dem Boden bestimmt werden.

Besagte Vermessung der Druckverteilung über der Auftrittsfläche stellt einen ersten Schritt bei der Fertigung eines individuellen Schuhs dar (s. den oben genannten Schritt a).

Alternativ oder additiv kann besagte Messung aber auch anders von statten gehen: Beispielsweise kann mittels einer Kamera der Fuß der Person während des Laufens bzw. Joggens auf einem Laufband beobachtet und hieraus Aussagen über das Pronations- bzw. Supinationsverhalten des Fußes der Person gewonnen werden.

In beiden Fällen ist es generell im weiteren Verlauf möglich, gemäß obigem Schritt b) den Verlauf einer Materialeigenschaft bzw. einer mechanischen Eigenschaft der zu fertigenden Schuhsohle zu bestimmen. Hierunter ist zu verstehen, dass für unterschiedliche Bereiche der Sohle sowohl in Richtung der Längsachse L der Sohle als auch in Richtung Q quer hierzu beispielsweise die Festigkeit oder Härte des Sohlenmaterials definiert wird, die angestrebt wird, um dem Fuß der Person optimale Stütze zu geben.

So kann beispielsweise vorgesehen werden, dass in den Bereichen, in denen ein in Relation zu anderen Bereichen hoher Druck herrscht (siehe zum Beispiel den Bereich a) im Verhältnis zu dem Bereich d) in Figur 1) ein härteres Material vorgesehen wird, als es in anderen Bereichen der Sohle der Fall ist, um dem Fuß insoweit eine bessere Stütze zu geben.

Genauso kann beispielsweise additiv oder alternativ durch Auswertung des Pronations- oder Supinationsverhaltens des Fußes der Person gezielt durch Erhöhung oder Erniedrigung der Materialfestigkeit bzw. Materialsteifigkeit der Sohle einer Abweichung von einer Idealform entgegengewirkt werden.

Diese Festlegung des Verlaufs der Materialeigenschaft bzw. mechanischen Eigenschaft der Sohle über die Koordinaten L und Q kann dabei von einem Spezialisten vorgenommen werden. Genauso ist es aber auch möglich, dass durch Vorgabe eines entsprechenden Algorithmus die per Messgerät 2 ermittelten Werte automatisch in eine entsprechende Vorgabe für die besagten Eigenschaften umgerechnet werden. Obiger Schritt b) wird folglich bevorzugt automatisch von einem Rechner durchgeführt. Hierzu können gegebenenfalls gespeicherte Vergleichswerte oder Optimalwerte für die Bestimmung des Verlaufs der Eigenschaften herangezogen werden, wobei besagte Werte gegebenenfalls auch nach Vorgabe von Daten der Person (z. B. Größe, Gewicht, Geschlecht) aus einer Datenbank entnommen werden können.

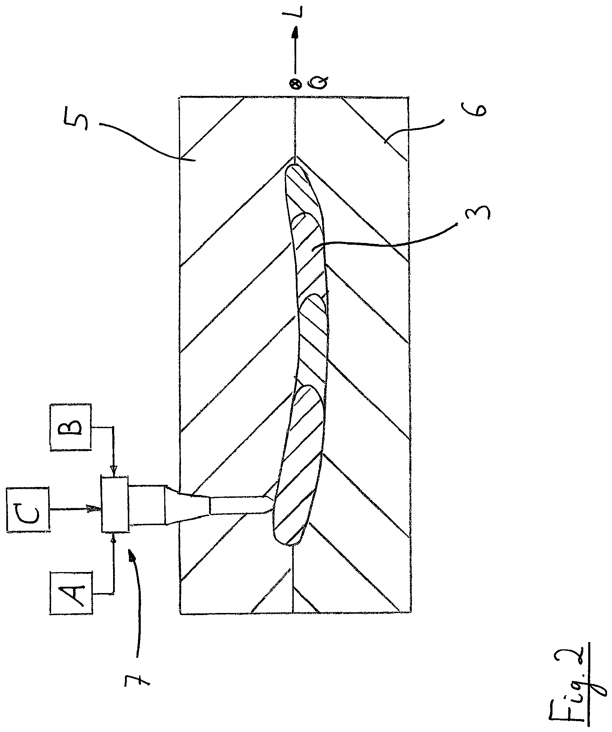

In Figur 2 ist der oben angesprochene Schritt c) des Herstellens einer Sohle 3 illustriert. Zu erkennen ist ein oberes Werkzeugteil 5 und ein unteres Werkzeugteil 6 eines Spritzgießwerkzeugs, in dem eine Kavität für die Sohle 3 ausgebildet ist. Über ein Angußsystem wird Kunststoffmaterial in die Kavität des Werkzeugs eingespritzt, wobei hier ein Mischkopf 7 angedeutet ist, in dem Polyurethan hergestellt und ins Werkzeug eingegeben wird. Dabei wird ein erstes Grundmaterial A in Form von Polyol mit einem zweiten Grundmaterial B in Form von Isocyanat zum Polyurethan vermischt.

Dargestellt ist weiterhin ein Behälter für ein Additiv C, das den Materialien A und B zugegeben werden kann und das dessen Materialeigenschaften bzw. mechanischen Eigenschaften verändert.

Wie in Figur 2 durch verschiedene Schraffuren angedeutet ist, sind durch unterschiedliche Wahl der Komponenten A, B und C und insbesondere unterschiedliche Zugabemengen des Additivs C über die Erstreckungsrichtung L der Sohle 3 unterschiedliche Abschnitte der Sohle 3 ausgebildet, die sich durch unterschiedliche Materialeigenschaften und/oder mechanischen Eigenschaften auszeichnen. Dabei erfolgt die Steuerung der Zugabe der Komponenten A, B, C im Mischkopf 7 dergestalt, dass sich der in Figur 1 dargestellte gewünschte Verlauf für die Bereiche a, b, c, d, e und f ergibt.

Es muss an dieser Stelle nicht erwähnt werden, dass es sich insoweit bei Figur 2 um eine schematische Darstellung des erläuterten Prinzips handelt, wobei es bei entsprechender Vorgabe der Materialverteilung in zwei Koordinatenrichtungen L und Q (wie in Figur 1 zu sehen) erforderlich werden wird, gegebenenfalls durch mehrere Spritzdüsen bzw. Mischköpfe 7 an unterschiedlichen Stellen des Werkzeugs Material aufzubereiten und einzuspritzen, um in der Ebene gezielt eine gewünschte Verteilung des Materials mit den jeweiligen Eigenschaften zu erreichen. Die hierfür benötigte Maschinentechnik ist allerdings bekannt und braucht daher hier nicht im Detail erläutert zu werden.

Gegebenenfalls kann durch eine numerische rheologische Analyse des Fließverhaltens des in die Kavität eingespritzten Materials (sog. "Meltflow"-Analyse) die Steuerung der Zugabe der Komponenten A, B, C erfolgen, so dass nach erfolgter vollständiger Füllung der Kavität die gewünschte Schichtung der Materialien unterschiedlicher Eigenschaft in der Kavität vorliegt (siehe Schraffur der Sohle 3 in Figur 2).

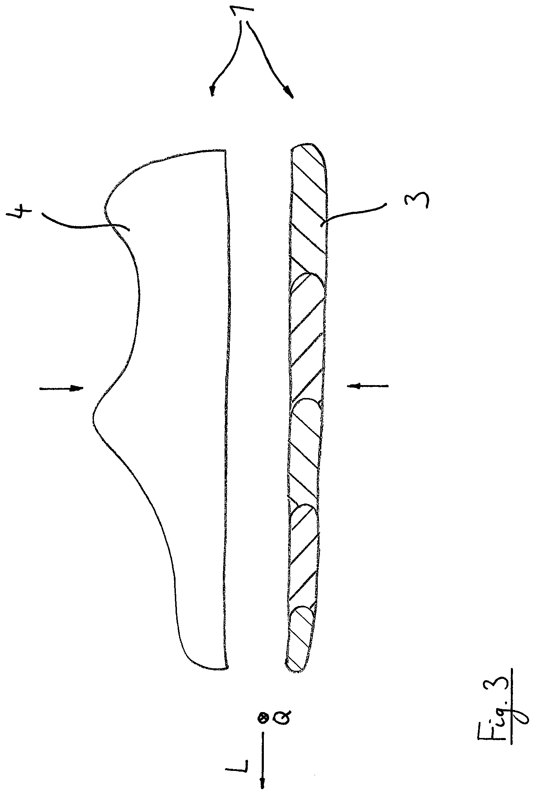

In Figur 3 ist schließlich die Durchführung des obigen Schritts d) illustriert, wonach die nunmehr fertig hergestellte Sohle 3 mit einem Schuhoberteil 4 verbunden wird, um den Schuh 1 fertig zu stellen (siehe die beiden aufeinander zu gerichteten Pfeile).

Die Verbindung zwischen Sohle 3 und Schuhoberteil 4 kann in bekannter Weise erfolgen, insbesondere also durch Vernähen oder Verkleben.

### Bezugszeichenliste:

- 1: Schuh
- 2: Messgerät (Druckaufnahmeplatte)
- 3: Sohle
- 4: Schuhoberteil
- 5: oberes Werkzeugteil
- 6: unteres Werkzeugteil
- 7: Mischkopf

- L: Erstreckungsrichtung der Sohle (Längsachse der Sohle)
- Q: Richtung quer zur Längsachse

- A: erstes Grundmaterial (Polyol)
- B: zweites Grundmaterial (Isocyanat)
- C: Additiv

- a, b, c, d, e, f: Bereiche unterschiedlichen Drucks

## Patentansprüche

1. Verfahren zum Herstellen eines Schuhs (1), insbesondere eines Sportschuhs, umfassend die Schritte:
a) Messen mindestens einer individuellen Eigenschaft des Fußes einer Person und/oder einer Laufeigenschaft der Person mittels eines Messgeräts (2);
b) Bestimmen des Verlaufs einer Material- und/oder mechanischen Eigenschaft mindestens einer Sohle (3) oder eines Sohlenteils des Schuhs (1) entlang mindestens einer Erstreckungsrichtung (L) der Sohle (3) oder des Sohlenteils in Abhängigkeit der gemäß Schritt a) gemessenen Werte anhand eines vorgegebenen Algorithmus oder einer vorgegebenen Regel;
c) Herstellen der Sohle (3) oder eines Sohlenteils des Schuhs (1), wobei die Materialeigenschaften und/oder mechanischen Eigenschaften entlang der mindestens einer Erstreckungsrichtung (L) der Sohle (3) oder des Sohlenteils verändert werden, so dass die Materialeigenschaften und/oder mechanischen Eigenschaften zumindest annähernd dem gemäß Schritt b) bestimmten Verlauf entsprechen;
d) Verbinden der gemäß Schritt c) hergestellten Sohle (3) oder des Sohlenteils mit einem Schuhoberteil (4), um den Schuh (1) fertigzustellen,
**dadurch gekennzeichnet, dass**
die Herstellung gemäß Schritt c) erfolgt, indem Kunststoffmaterial in die Kavität eines Spritzgießwerkzeugs eingespritzt wird, wobei einem Grundmaterial (A, B) der Sohle (3) oder des Sohlenteils bei der Fertigung der Sohle (3) oder des Sohlenteils mindestens ein Additiv (C) abschnittsweise in unterschiedlichem Maße zugegeben wird.

2. Verfahren nach Anspruch 1, **dadurch gekennzeichnet, dass** das Messen gemäß Schritt a) von Anspruch 1 erfolgt, indem die Druckverteilung des Fußes der Person über der Auftrittsfläche des Fußes am Boden bestimmt wird.

3. Verfahren nach Anspruch 2, **dadurch gekennzeichnet, dass** das Messen mittels einer Druckaufnahmeplatte (2) erfolgt.

4. Verfahren nach Anspruch 1, **dadurch gekennzeichnet, dass** das Messen gemäß Schritt a) von Anspruch 1 erfolgt, indem das Laufverhalten der Person ermittelt wird, insbesondere die Tendenz des Fußes zur Pronation oder Supination.

5. Verfahren nach Anspruch 4, **dadurch gekennzeichnet, dass** das Messen mittels einer Kamera und einem Laufband erfolgt.

6. Verfahren nach einem der Ansprüche 1 bis 5, **dadurch gekennzeichnet, dass** die Bestimmung gemäß Schritt b) nach Anspruch 1 erfolgt, indem der Verlauf einer Material- und/oder mechanischen Eigenschaft entlang der Längsachse (L) der Sohle (3) festgelegt wird.

7. Verfahren nach einem der Ansprüche 1 bis 6, **dadurch gekennzeichnet, dass** das Grundmaterial (A, B) der Sohle (3) oder des Sohlenteils Polyurethan ist.

8. Verfahren nach einem der Ansprüche 1 bis 7, **dadurch gekennzeichnet, dass** die Materialeigenschaft, die entlang der mindestens einen Erstreckungsrichtung (L) der Sohle (3) oder des Sohlenteils verändert wird, die Härte, insbesondere die Shore-Härte, ist.

9. Verfahren nach einem der Ansprüche 1 bis 8, **dadurch gekennzeichnet, dass** das gefertigte Sohlenteil eine Zwischensohle des Schuhs (1) ist.

10. Verfahren nach einem der Ansprüche 1 bis 8, **dadurch gekennzeichnet, dass** das gefertigte Sohlenteil eine Außensohle des Schuhs (1) ist.

11. Verfahren nach einem der Ansprüche 1 bis 10, **dadurch gekennzeichnet, dass** die Sohle (3) beim Verbinden gemäß Schritt d) nach Anspruch 1 mit dem Schuhoberteil (4) vernäht und/oder verklebt wird.

12. Verfahren nach einem der Ansprüche 1 bis 11, **dadurch gekennzeichnet, dass** die Schritte a) bis d) gemäß Anspruch 1 in räumlicher Nähe erfolgen, insbesondere in einem Schuhgeschäft.

13. Verfahren nach einem der Ansprüche 1 bis 12, **dadurch gekennzeichnet, dass** die Schritte a) bis d) gemäß Anspruch 1 in zeitlicher Nähe erfolgen, insbesondere binnen eines Zeitraums von maximal 3 Stunden.

## Claims

1. Method for producing a shoe (1), in particular a sports shoe, comprising the steps:
a) Measuring at least one individual characteristic of the foot of a person and/or one walking characteristic of the person by means of a measuring device (2);
b) Determining the progression of a material characteristic and/or mechanical characteristic of at least one sole (3) or one sole part of the shoe (1) along at least one direction of extend (L) of the sole (3) or of the sole part in accordance with the values measured according to step a) using a specified algorithm or a specified rule;
c) Producing the sole (3) or a sole part of the shoe (1), wherein the material characteristics and/or mechanical characteristics are varied along the at least one direction of extend (L) of the sole (3) or of the sole part such that the material characteristic and/or mechanical characteristics at least approximately correspond to the progression determined according to step b);
d) Connecting the sole (3) produced according to step c) or the sole part to an upper (4) in order to complete the shoe (1),
**characterized in that**
the production according to step c) takes place by injecting of plastic material into the cavity of an injection moulding tool, wherein at least one additive (C) is added in sections in different quantities to a base material (A, B) of the sole (3) or of the sole part at the production of the sole (3) or the sole part.

2. Method according to claim 1, **characterized in that** the measuring according to step a) of claim 1 takes place by determining the pressure distribution of the foot of the person along the contact area of the foot on the ground.

3. Method according to claim 2, **characterized in that** the measuring takes place by means of a pressure sensor plate (2).

4. Method according to claim 1, **characterized in that** the measuring according to step a) of claim 1 takes place by determining the running behaviour of the person, especially the tendency of the foot to pronation or to supination.

5. Method according to claim 4, **characterized in that** the measuring takes place by means of a camera and a treadmill.

6. Method according to one of claims 1 to 5, **characterized in that** the determination according to step b) of claim 1 takes place by determining the progression of a material characteristic and/or mechanical characteristic along the longitudinal axis (L) of the sole (3).

7. Method according to one of claims 1 to 6, **characterized in that** the base material (A, B) of the sole (3) or the sole part is polyurethane.

8. Method according to one of claims 1 to 7, **characterized in that** the material characteristic which is modified along at least one direction of extend (L) of the sole (3) or of the sole part is the hardness, especially the Shore hardness.

9. Method according to one of claims 1 to 8, **characterized in that** the produced sole part is a midsole of the shoe (1).

10. Method according to one of claims 1 to 8, **characterized in that** the produced sole part is an outsole of the shoe (1).

11. Method according to one of claims 1 to 10, **characterized in that** the sole (3) is sewed and/or glued with the upper (4) at connecting according to step d) of claim 1.

12. Method according to one of claims 1 to 11, **characterized in that** the steps a) to d) of claim 1 take place in areal closeness, especially in a shoe store.

13. Method according to one of claims 1 to 12, **characterized in that** the steps a) to d) of claim 1 take place in temporal closeness, especially within a period of maximal 3 hours.

## Revendications

1. Procédé de fabrication d'une chaussure (1), en particulier d'une chaussure de sport, comprenant les étapes suivantes :
a) la mesure d'au moins une propriété individuelle du pied d'une personne et/ou une propriété de déplacement de la personne au moyen d'un appareil de mesure (2) ;
b) la détermination de l'allure d'une propriété de matière et/ou mécanique d'au moins une semelle (3) ou d'une partie de semelle de la chaussure (1) le long d'au moins une direction d'étendue (L) de la semelle (3) ou de la partie de semelle en fonction des valeurs mesurées à l'étape a) sur la base d'un algorithme prédéterminé ou d'une règle prédéterminée ;
c) la fabrication de la semelle (3) ou d'une partie de semelle de la chaussure (1), les propriétés de matière et/ou les propriétés mécaniques étant modifiées le long de l'au moins une direction d'étendue (L) de la semelle (3) ou de la partie de semelle, de telle sorte que les propriétés de matière et/ou les propriétés mécaniques correspondent au moins approximativement à l'allure déterminée à l'étape b) ;
d) la liaison de la semelle (3) ou de la partie de semelle fabriquée à l'étape c) à une partie supérieure de chaussure (4) afin d'achever la chaussure (1),
**caractérisé en ce que**
la fabrication à l'étape c) a lieu en injectant de la matière plastique dans la cavité d'un outil de moulage par injection, au moins un additif (C) étant ajouté en sections en une mesure différente dans une matière de base (A, B) de la semelle (3) ou de la partie de semelle lors de la production de la semelle (3) ou de la partie de semelle.

2. Procédé selon la revendication 1, **caractérisé en ce que** la mesure à l'étape a) de la revendication 1 a lieu en déterminant la répartition de pression du pied de la personne sur la surface de marche du pied sur le sol.

3. Procédé selon la revendication 2, **caractérisé en ce que** la mesure a lieu au moyen d'une plaque d'absorption de pression (2).

4. Procédé selon la revendication 1, **caractérisé en ce que** la mesure à l'étape a) de la revendication 1 a lieu en établissant le comportement de déplacement de la personne, en particulier la tendance du pied à la pronation ou supination.

5. Procédé selon la revendication 4, **caractérisé en ce que** la mesure a lieu au moyen d'une caméra et d'un tapis roulant.

6. Procédé selon l'une quelconque des revendications 1 à 5, **caractérisé en ce que** la détermination à l'étape b) selon la revendication 1 a lieu en spécifiant l'allure d'une propriété de matière et/ou mécanique le long de l'axe longitudinal (L) de la semelle (3).

7. Procédé selon l'une quelconque des revendications 1 à 6, **caractérisé en ce que** la matière de base (A, B) de la semelle (3) ou de la partie de semelle est du polyuréthane.

8. Procédé selon l'une quelconque des revendications 1 à 7, **caractérisé en ce que** la propriété de matière qui est modifiée le long de l'au moins une direction d'étendue (L) de la semelle (3) ou de la partie de semelle est la dureté, en particulier la dureté Shore.

9. Procédé selon l'une quelconque des revendications 1 à 8, **caractérisé en ce que** la partie de semelle produite est une semelle intermédiaire de la chaussure (1) .

10. Procédé selon l'une quelconque des revendications 1 à 8, **caractérisé en ce que** la partie de semelle produite est une semelle extérieure de la chaussure (1) .

11. Procédé selon l'une quelconque des revendications 1 à 10, **caractérisé en ce que** la semelle (3) est cousue et/ou collée avec la partie supérieure de chaussure (4) lors de la liaison à l'étape d) selon la revendication 1.

12. Procédé selon l'une quelconque des revendications 1 à 11, **caractérisé en ce que** les étapes a) à d) selon l'étape 1 ont lieu à proximité dans l'espace, en particulier dans un magasin de chaussures.

13. Procédé selon l'une quelconque des revendications 1 à 12, **caractérisé en ce que** les étapes a) à d) selon la revendication 1 ont lieu à proximité dans le temps, en particulier en une période d'au plus 3 heures.
